(19) Europäisches Patentamt
European Patent Office
Office européen des brevets

(11) Numéro de publication: **0 407 242 A1**

(12) **DEMANDE DE BREVET EUROPEEN**

(21) Numéro de dépôt: 90401669.8

(22) Date de dépôt: 15.06.90

(51) Int. Cl.5: **C01F 17/00**

(30) Priorité: 22.06.89 FR 8908316

(43) Date de publication de la demande:
09.01.91 Bulletin 91/02

(84) Etats contractants désignés:
AT BE CH DE DK ES FR GB GR IT LI LU NL SE

(71) Demandeur: RHONE-POULENC CHIMIE
25, quai Paul Doumer
F-92408 Courbevoie Cédex(FR)

(72) Inventeur: Picard, Françoise
50, avenue de la Dame Blanche
F-94120 Fontenay/Sous/Bois(FR)

(74) Mandataire: Esson, Jean-Pierre et al
RHONE-POULENC CHIMIE Service Brevets
Chimie 25, quai Paul Doumer
F-92408 Courbevoie Cedex(FR)

(54) Mélanges déshydratés d'halogénures de terres rares et d'alcalino-terreux ou d'alcalins.

(57) La présente invention concerne des mélanges déshydratés d'halogénures de terres rares et d'alcalino-terreux ou d'alcalins et un procédé de production de ceux-ci.

Elle concerne plus particulièrement des mélanges qui contiennent un halogénure de terre rare de type chlorure, bromure, iodure, moins de 2,5 % en poids d'eau et moins de 4,5% en poids d'oxyhalogénure. Ces mélanges sont obtenus par déshydratation des halogenures hydratés par passage d'un courant d'un agent déshydratant halogéné (hydrure d'halogène) à travers la masse à déshydrater.

EP 0 407 242 A1

# MELANGES DESHYDRATES D'HALOGENURES DE TERRES RARES ET D'ALCALINO-TERREUX OU D'ALCALNS

La présente invention concerne des mélanges déshydratés d'halogénures de terres rares et d'alcalino-terreux ou d'alcalins et un procédé de production de ceux-ci.

Elle concerne plus particulièrement des mélanges d'halogénures de terres rares et d'alcalino-terreux ou d'alcalins du type chlorure, bromure ou iodure comprenant un très faible pourcentage d'eau et une très faible teneur en oxyhalogénure de terres rares.

Les halogénures de terres rates sont fabriqués généralement en milieu aqueux, par exemple, par attaque acide en milieu aqueux d'un oxyde de terre rare.

Ainsi les halogénures obtenus, à l'exception du fluorure sont des halogénures hydratés comprenant plusieurs molécules d'eau, typiquement de 3 à 9 par molécule d'halogénure.

Cette eau de structure peut être gênante dans certaines applications, ou utilisations des halogénures telles que par exemple, les procédés de réduction chimique ou électrochimique pour la production de métal comme la production de néodyme ou d'alliage de celui-ci avec d'autres métaux.

De nombreux procédés de déshydratation de ces halogénures de terres rares hydratés ont été proposés dans la littérature.

Ainsi, VW. Wendlandt dans J. Inorg. Nucl. Chem. 5 (1957) 118, a étudié la décomposition thermique des chlorures de terres rares hydratés. Cette déshydratation permet d'obtenir le monohydrate d'halogénure. Toutefois, l'élimination de cette dernière molécule d'eau demande un chauffage à une température supérieure à 200°C. A cette température les halogénures de terres rares se transforment en oxyhalogénures. La présence de ces oxyhalogénures est également très gênante dans les procédés de production de métal cités ci-dessus.

Il a également été proposé des procédés de déshydratation utilisant un agent de déshydratation tel que les halogénures d'hydrogène, halogénures d'ammonium, le tétrachlorure de carbone, le phosgène ou SOCl₂ ainsi que les halogènes. Les procédés décrits notamment par Matignon (C.R. accord. Sci. 134 (1902), 427) et Kleinheksel et Kremers (JACS 50 (1928), 959) consistent à faire passer un courant gazeux d'agent de déshydratation sur l'halogénure hydraté. Toutefois, ces procédés ne permettent pas d'abaisser la concentration en eau et/ou en oxyhalogénure à des valeurs faibles, notamment quand la masse d'halogénures de terres rares à déshydrater est importante.

De tels procédés sont donc inexploitables industriellement.

La présente invention a notamment pour but de remédier à tous ces inconvénients en proposant un procédé permettant de déshydrater des halogénures de terres rares hydrates pour produire industriellement des halogénures contenant de faibles teneurs tant en eau qu'en oxyhalogénure, et contenant des halogénures d'alcalino-terreux.

A cet effet, l'invention propose des mélanges déshydratés d'halogénures de terres rares et d'alcalino-terreux ou d'alcalins, à l'exception des fluorures contenant au moins 10 % en poids d'halogénure d'alcalino-terreux ou d'alcalins et une teneur en eau comprise entre 0,01 % et 2,5 % tandis que la teneur en oxychlorure de terres rares est comprise entre 0,01 % et 4,5 %.

Ces mélanges qui contiennent peu d'eau et d'oxychlorure sont notamment utilisés comme matières premières dans les procédés métallurgiques de fabrication des métaux de terre rare tels que les procédés électrolytiques ou de réduction de l'halogénure de terre rare par un métal alcalin ou alcalino-terreux.

Selon une caractéristique de l'invention l'halogénure d'alcalino-terreux ou d'alcalins est présent dans le mélange avec une concentration pondérale au moins égal à 10 %, avantageusement supérieure à 15 % et avantageusement comprise entre 15 % et 60 %.

Ces pourcentages correspondent à des teneurs pondérales exprimés par rapport au poids total du mélange.

Les halogénures d'alcalino-terreux ou d'alcalins peuvent être présents seuls ou en mélange avec des halogénures d'alcalins ou d'alcalino-terreux.

Comme halogénures d'alcalino-terreux ou d'alcalins, on peut citer les halogénures de calcium, barium, magnésium, lithium, sodium, potassium.

L'halogène de l'halogénure d'alcalino-terreux ou d'alcalin peut être différent ou identique de celui de l'halogénure de terre rare.

L'halogénure d'alcalino-terreux préféré de l'invention est le chlorure de calcium et celui d'alcalin le chlorure de sodium ou le chlorure de potassium.

L'expression "terres rares" (TR) utilisée conformément à l'invention comprend les éléments terres rares appelés lanthanides ayant des numéros atomiques de 57 à 71 inclus et l'yttrium de numéro atomique égal à 39. De plus, on désigne par "terres rares cériques", les éléments les plus légers commençant avec le lanthane et s'étendant au samarium conformément au numéro atomique et par "terres rares yttriques", les éléments les plus lourds des terres rares commençant par l'europium et finissant par le lutécium et comprenant l'yttrium.

L'invention s'applique à tous les halogénures de ces éléments et notamment aux halogénures de lanthane, néodyme, cérium, praséodyme, yttrium, gadolinium.

Bien entendu, l'invention s'applique uniquement aux halogénures de terres rares hydratés. Ainsi, l'invention ne s'applique pas aux fluorures de terres rares qui ne contiennent pas d'eau d'hydratation, ou halogénures de terres rares obtenus par voie anhydre.

L'invention a également pour objet un procédé permettant d'obtenir les compositions de l'invention par déshydratation d'halogénures hydratés.

Ce procédé consiste à mélanger l'halogénure de terre rare hydraté avec un halogénure d'alcalino-terreux ou d'alcalins, à porter ce mélange à une température comprise entre 150°C et 350°C. Cette déshydratation est avantageusement conduite sous pression partielle, par exemple sous une pression de l'ordre de 1300 Pa.

Par mélange, on entend un mélange plus ou moins homogène des deux poudres d'halogénures. Ce mélange peut être réalisé par tout moyen et l'homogénéité de celui-ci n'est pas critique pour l'invention.

Les températures ou domaines de températures optimales de déshydratation sont différents pour chaque halogénure de terre rare et sont notamment dépendants de la température de déshydratation à laquelle la dernière molécule d'eau de l'halogénure hydraté s'évapore.

Avantageusement, les halogénures de terre rare à déshydrater et les halogénures d'alcalinoterreux ou d'alcalins possèdent avantageusement des atomes d'halogène de même nature.

Par ailleurs, il peut être avantageux d'utiliser comme halogénure de terre rare un halogénure préséché préalablement par chauffage avantageusement sous pression réduite, avant d'être mélangé avec un halogénure d'alcalin ou d'alcalino-terreux.

Il est également possible, sans pour cela sortir du caddre de l'invention, de faire passer sur ou à travers la masse de mélange, un flux gazeux comprenant au moins un composé halogéné déshydratant tel que, par exemple, les halogénures d'hydrogène, halogénures d'ammonium, les halogènes, le tétrachlorure de carbone, le phosgène ou $S_2Cl_2$.

L'invention sera illustrée par les exemples donnés ci-dessous uniquement à titre indicatif.

Exemple 1
___

On mélange intimmement du chlorure de néodyme hydraté (6,9 moles d'eau par mole de $NdCl_3$)
avec du chlorure de calcium, pour obtenir un mélange contenant 70 % en poids de chlorure de néodyme et 30 % en poids de $CaCl_2$.

Ce mélange est ensuite chauffé sous pression réduite (de l'ordre de 1300 Pa) à une température égale à 240°C, pendant 3 heures. Avantageusement, la montée en température est de 1,3°C/mn.

Après refroidissement, le mélange obtenu contient 1,4 % d'eau et 4,1 % d'oxychlorure de néodyme (teneurs pondérales).

Exemple 2
___

On répète l'exemple 1 mais en réalisant un mélange chlorure de néodyme / chlorure de calcium comprenant 50 % de chlorure de calcium. Le mélange obtenu après chauffage à 300°C sous une pression de 1300 Pa contient 2 % d'eau et 3,3 % d'oxychlorure de néodyme.

Exemple 3
___

L'essai 1 est répété mais avec un mélange contenant 85 % de $NdCl_3$ et 15 % de $CaCl_2$.

Le mélange obtenu présente une teneur en eau égale à 1,3 % et en oxychlorure égale à 4,3 %.

Exemple 4
___

L'essai 1 est répété mais avec un mélange contenant 70 % de $NdCl_3$ et 30 % de chlorure de potassium.

Le mélange obtenu contient 2 % en eau et 2,7 % en oxychlorure de néodyme.

**Revendications**

1. Mélanges déshydratés d'halogénures de terres rares et d'alcalino-terreux ou d'alcalins, à l'exception des fluorures, caractérisés en ce qu'ils contiennent au moins 10 % en poids d'halogénure d'alcalino-terreux ou d'alcalins et en ce que la teneur pondérale en eau est comprise entre 0,01 % et 2,5 % et celle en oxyhalogénure de terres rares entre 0,01 % et 4,5 %.

2. Mélanges selon la revendication 1 caractérisés en ce que l'halogène est le chlore.

3. Mélanges selon l'une des revendications 1 ou 2 caractérisés en ce que les terres rares comprennent les éléments de la famille des lanthanides, y compris l'yttrium.

4. Mélanges selon la revendication 3, caractérisés en ce que les terres rares sont choisies dans le groupe comprenant le lanthane, le néodyme, le praséodyme, l'yttrium, le gadolinium, le cérium.

5. Mélanges selon l'une des revendications 1 à 4 caractérisés en ce que la concentration pondérale en halogénure d'alcalino-terreux ou d'alcalins est supérieure à 15 %, de préférence entre 15 et 60 %.

6. Mélanges selon l'une des revendications 1 à 5, caractérisés en ce que l'halogénure d'alcalino-terreux est un halogénure de calcium, barium, magnésium.

7. Mélanges selon l'une des revendications 1 à 5, caractérisé en ce que l'halogénure d'alcalin est un halogénure de sodium, lithium, potassium.

8. Mélanges selon l'une des revendications 1 à 7 caractérisés en ce que l'halogénure d'alcalino-terreux est le chlorure de calcium.

9. Procédé d'obtention des mélanges selon l'une des revendications 1 à 8, caractérisé en ce qu'il consiste à mélanger un halogénure de terre rare hydraté avec un halogénure alcalino-terreux ou d'alcalin et à porter ce mélange à une température comprise entre 150°C et 350°C.

10. Procédé selon la revendication 9 caractérisé en ce que l'halogène de l'halogénure de terre rare et de l'alcalino-terreux ou de l'alcalin sont identiques.

11. Procédé selon la revendication 9 ou 10 caractérisé en ce que le séchage est réalisé sous pression réduite.

12. Procédé selon l'une des revendications 9 à 11, caractérisé en ce que l'halogénure de terre rare hydraté est préséché préalablement à l'étape de mélange avec l'halogénure d'alcalino-terreux ou d'alcalin.

13. Procédé selon la revendication 12, caractérisé en ce que le préséchage est réalisé par chauffage sous pression réduite.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | Bergmann H.: "Gmelin Handbuch der Anorganischen Chemie; teil 5C, no. 39" 1977, Springer, Berlin * page 163, alinéa 1 * | 9, 10 | C01F17/00 |
| A | FR-A-1244305 (MOLYBDENUM CORP.) * revendication B(4) * | 9 | |
| A | CHEMICAL ABSTRACTS, vol. 75, no. 24, 13 décembre 1977 Columbus, Ohio, USA Kutscher J. et al.: "Preparation of anhydrous lanthanide halides, especially iodides." page 479; colonne de droite; ref. no. 147241 M * abrégé * | | |
| A | Chem. Rev. vol. 62, 1962, pages 503 - 511; M.D. Taylor: "Preparation of anhydrous lanthanon halides" | | |

| DOMAINES TECHNIQUES RECHERCHES (Int. Cl.5 ) |
|---|
| C01F C01B |

Le présent rapport a été établi pour toutes les revendications

| Lieu de la recherche | Date d'achèvement de la recherche | Examinateur |
|---|---|---|
| LA HAYE | 18 OCTOBRE 1990 | ZALM W.E. |